# EUROPEAN PATENT SPECIFICATION

(11) **EP 4 451 839 B1**
(45) Date of publication and mention of the grant of the patent: **28.01.2026**
(21) Application number: 22821692.5
(22) Date of filing: 06.12.2022
(51) Int. Cl.: A01D 34/74, A01D 34/68, A01D 34/86, A01D 34/00

(54) **CUTTING ASSEMBLY AND LAWNMOWER**
SCHNEIDWERK UND RASENMÄHER
ENSEMBLE DE COUPE ET TONDEUSE À GAZON

(30) Priority: 21.12.2021 SE 2151564
(43) Date of publication of application: 30.10.2024
(73) Proprietor: Husqvarna AB, 561 82 Huskvarna (SE)
(72) Inventor: AGERHALL, Jonas, 562 41 TABERG (SE)
(86) International application number: PCT/SE2022/051144
(87) International publication number: WO 2023/121534

(56) References cited:
- CN-A- 108 174 681
- CN-B- 108 521 976
- CN-U- 210 432 423
- US-A1- 2020 221 634

## Description

### TECHNICAL FIELD

The present disclosure relates to a cutting assembly configured to be mounted to a lawnmower to cut vegetation. The present disclosure further relates to a lawnmower comprising a lawnmower body and a cutting assembly mounted to the lawnmower body.

### BACKGROUND

A lawnmower is an apparatus capable of cutting grass of a lawn. Various types of lawnmowers exist on today's market. Examples are walk-behind mowers, riding mowers, and self-propelled robotic lawnmowers. A walk-behind mower is a lawnmower usually comprising an elongated handle allowing a user to push, and/or to guide, the lawnmower. Some walk-behind mowers comprise a propulsion arrangement configured to drive one or more wheels of the lawnmower. Walk-behind mowers lacking a propulsion arrangement are sometimes referred to as "push mowers". A riding mower is a mower comprising a seat for a user, a steering device, such as a steering wheel, and a motor configured to provide motive power to the riding mower. Usually, riding mowers are used to mow bigger lawns, gardens, parks, sports fields, golf courses or the like.

A self-propelled robotic lawnmower is a mower capable of cutting grass in areas in an autonomous manner. Some robotic lawnmowers require a user to set up a border wire around a lawn that defines the area to be mowed. Such robotic lawnmowers use a sensor to locate the wire and thereby the boundary of the area to be trimmed. In addition to the wire, robotic lawnmowers may also comprise other types of positioning units and sensors, for example sensors for detecting an event, such as a collision with an object within the area. The robotic lawnmower may move in a systematic and/or random pattern to ensure that the area is completely cut. A robotic lawnmower usually comprises one or more batteries and one or more electrically driven cutting units being powered by the one or more batteries. In some cases, the robotic lawnmower uses the wire to locate a recharging dock used to recharge the one or more batteries. Generally, robotic lawnmowers operate unattended within the area in which they operate. Examples of such areas are lawns, gardens, parks, sports fields, golf courses and the like.

Lawnmowers of various types are associated with some mutual problems. One such problem is the cutting result which can be defined as the uniformity of a length of the grass of a mowed lawn, i.e., if straws of the grass in a lawn are cut to a uniform length. In many lawnmowers, there is a long tolerance chain from lawnmower support wheels of the lawnmower and the cutting unit of the lawnmower which can make precise cutting difficult. Moreover, uneven contours of a ground surface, such as undulations, bumps, pits, and the like in the ground surface, add to the problem of providing high precision cutting with a high uniformity of a length of the grass being cut.

Another problem is scalping which occurs when the cutting unit hits the ground surface. Scalping can damage the lawn and normally requires regrowth of grass in a scalped area. Furthermore, scalping normally leaves unaesthetic marks in the lawn. In addition, scalping can damage or wear the cutting unit and may also pose a safety risk because soil and other matter of the ground surface, such as small stones, sticks, and the like, may be thrown away from the cutting unit at high velocities.

The above-mentioned problems are especially problematic when wanting to cut grass to a low cutting height, such as when cutting the grass of a golf course, or the like.

Furthermore, generally, on today's consumer market, it is an advantage if products, such as lawnmowers and associated components, systems, and arrangements, have conditions and/or characteristics suitable for being manufactured and assembled in a cost-efficient manner.

US-2020221634-A1 describes a grounds maintenance vehicle has a vehicle frame defining a column opening having a first end and a second end. An implement is coupled to the vehicle frame. A height adjustment column has a base and distal end, where the base is fixed to the implement. The distal end of the height adjustment column extends through the column opening from the first end beyond the second end. The height adjustment column defines a first locking structure and a plurality of height setting locations. A height selection tool is couplable to the height adjustment column and is translatable to each of the plurality of height setting locations. A second locking structure is coupled to the vehicle frame, where the second locking structure is configured to releasably engage the first locking structure such that the plurality of height setting locations are positioned beyond the second end of the column opening.

CN-108174681-A describes a liftable garden weeding device. The liftable garden weeding device comprises a base, idler wheels are installed at the bottom of the base, and a push rod is fixedly connectedto the left side of the top of the base; an electric push rod is fixedly connected to the bottom of the right side of the base, and a protection cover is fixedly connected to the bottom of the electric push rod; a motor is fixed to the top of the protection cover, and a motor shaft at the top of the motor penetrates through the base to be fixedly provided with a blade.

CN-210432423-U describes a double-head mower which comprises a mower body, two guide rails arranged in the mower body and two cutting device assemblies connected to the guide rails in a sliding mode respectively, two pairs of pulleys are arranged at the front end and the rear end of the bottom of the mower body respectively, and the cutting device assemblies are arranged between the pulleys. Each cutting device assembly comprises a driving motor, a bearing platform, a first cutting knife, a second cutting knife and a supporting rod. The driving motor is arranged on the bearing platform, the bearing platform is connected to the guide rail in a sliding mode, one end of the supporting rod is connected with the bearing platform, and the other end of the supporting rod is provided with a rolling wheel so as to make rolling contact with the ground; according to the mower, the guide rail and the cutting device assembly are arranged to adapt to different uneven terrains, the situation that the cutter collides with the ground and is damaged due to the uneven terrains is effectively prevented, and the service life of the mower is prolonged.

### SUMMARY

It is an object of the present invention to overcome, or at least alleviate, at least some of the above-mentioned problems and drawbacks.

According to a first aspect of the invention, the object is achieved by a cutting assembly configured to be mounted to a lawnmower to cut vegetation. The cutting assembly comprises a mounting unit configured to be mounted to a lawnmower body of the lawnmower, a cutting arrangement comprising a cutting unit and a number of ground engaging members configured to abut against a ground surface during operation of the cutting assembly, and a connection arrangement. The cutting arrangement is linearly displaceably arranged relative to the mounting unit via the connection arrangement along a displacement axis to allow the number of ground engaging members to follow a contour of a ground surface during operation of the cutting assembly.

Since the cutting arrangement, which comprises the cutting unit and the number of ground engaging members, is linearly displaceably arranged relative to the mounting unit via the connection arrangement, a cutting assembly is provided having conditions for cutting with high precision to obtain a high uniformity of a length of the grass being cut, also in cases where undulated ground surfaces are being cut.

This is because forces derived from a ground engaging contact between the number of ground engaging members and a ground surface can move the cutting arrangement, and thereby also the cutting unit, relative to the lawnmower body to follow the contour of the ground surface during operation of the cutting assembly. Furthermore, since the cutting arrangement comprises the cutting unit and the number of ground engaging members, a significantly lower tolerance chain can be obtained between the number of ground engaging members and the cutting unit as compared to a tolerance chain between lawnmower support wheels and a cutting unit of a traditional lawnmower.

In addition, since the cutting arrangement is allowed to follow a contour of a ground surface by being linearly displaced along the displacement axis, a cutting assembly is provided having a significantly reduced risk of scalping during operation of the cutting assembly, also in cases where undulated ground surfaces are being cut.

As a further result, a cutting assembly is provided having conditions for cutting grass to a low cutting height, while obtaining a high uniformity of a length of the grass being cut and a low risk of scalping.

Furthermore, since the cutting assembly comprises the mounting unit, a cutting assembly is provided having conditions for replacing a cutting assembly of a previous type of lawnmower thereby providing a precision cutting lawnmower of the previous type of lawnmower in a cost-efficient manner, for example when wanting to cut the grass of demanding lawns, such as the grass of a golf course, or the like.

Accordingly, a cutting assembly is provided overcoming, or at least alleviating, at least some of the above-mentioned problems and drawbacks. As a result, the above-mentioned object is achieved.

Optionally, the connection arrangement comprises a number of rails attached to one of the mounting unit and the cutting arrangement and a number of followers attached to the other of the mounting unit and the cutting arrangement. Thereby, a connection arrangement is provided having conditions for holding the cutting arrangement relative to the mounting unit in a rigid and reliable manner upon linear displacement of the cutting arrangement relative to the mounting unit. As a further result thereof, conditions are provided for obtaining a high uniformity of a length of the grass being cut and a low risk of scalping.

Optionally, the connection arrangement comprises two or more followers arranged in each rail at a distance from each other measured in a direction parallel to the displacement axis. Thereby, a connection arrangement is provided having conditions for holding the cutting arrangement relative to the mounting unit in a more rigid and reliable manner relative to the mounting unit. Moreover, a cutting assembly is provided in which the cutting arrangement is less likely to become stuck relative to the mounting unit. As a further result thereof, conditions are provided for obtaining a high uniformity of a length of the grass being cut and a low risk of scalping.

Optionally, the connection arrangement comprises two rails arranged at a distance from each other measured in a direction perpendicular to the displacement axis. Thereby, an even more rigid connection arrangement is provided having conditions for holding the cutting arrangement relative to the mounting unit in an efficient and reliable manner upon linear displacement of the cutting arrangement relative to the mounting unit. As a further result thereof, conditions are provided for obtaining a high uniformity of a length of the grass being cut and a low risk of scalping.

Optionally, the connection arrangement comprises followers in the form of wheels. Thereby, a connection arrangement is provided having conditions for holding the cutting arrangement relative to the mounting unit in an efficient and reliable manner upon linear displacement of the cutting arrangement relative to the mounting unit. Moreover, a connection arrangement is provided in which the followers are less likely to become stuck in a rail. As a further result thereof, conditions are provided for obtaining a high uniformity of a length of the grass being cut and a low risk of scalping.

Optionally, each wheel comprises a ball bearing. Thereby, a connection arrangement is provided having conditions for holding the cutting arrangement relative to the mounting unit in an efficient and reliable manner upon linear displacement of the cutting arrangement relative to the mounting unit. Moreover, a connection arrangement is provided in which the followers are less likely to become stuck in a rail. As a further result thereof, conditions are provided for obtaining a high uniformity of a length of the grass being cut and a low risk of scalping.

The cutting assembly is configured to be mounted to a lawnmower such that an angle between the displacement axis and a surface normal of a flat surface is less than 15 degrees, or is less than 7 degrees, when the lawnmower is positioned in an upright use position on the flat surface. Thereby, it can be ensured that the cutting arrangement can move relative to the mounting unit in an efficient manner along the displacement axis upon operation of the cutting assembly. Moreover, a cutting assembly is provided in which the cutting arrangement is less likely to become stuck relative to the mounting unit. As a further result, conditions are provided for obtaining a high uniformity of a length of the grass being cut and a low risk of scalping.

Optionally, the cutting unit is configured to rotate around a rotation axis during operation of the cutting unit, and wherein the number of ground engaging members is/are arranged in front of the rotation axis with respect to a forward mowing direction of the cutting unit. Thereby, conditions are provided for obtaining an even higher uniformity of a length of the grass being cut and an even further reduced risk of scalping when the cutting assembly is moved in the forward moving direction along a lawn. That is, when a cutting unit is moved in forward moving direction moving direction along a lawn, a front portion of the cutting unit will perform the largest part of the cutting because the grass of the lawn has a greater height when reaching the front portion of the cutting unit than when reaching the rear portion of the cutting unit. Since the number of ground engaging members is/are arranged in front of the rotation axis with respect to a forward mowing direction of the cutting unit, the number of ground engaging members is/are arranged closer to a front portion of the cutting unit than a rear portion of the cutting unit. In this manner, a short distance between the number of ground engaging members and the front portion of the cutting unit can be provided which can ensure a precise cutting by the front portion of the cutting unit with a low risk of scalping when the cutting assembly is moved in the forward mowing direction over a lawn.

Optionally, the cutting unit comprises a number of cutting members, and wherein the number of ground engaging members is/are arranged in front of the cutting members with respect to a forward mowing direction of the cutting unit. Thereby, a cutting assembly is provided in which the number of ground engaging members is/are arranged closer to a front portion of the cutting unit than a rear portion of the cutting unit. That is, as explained above, when a cutting unit is moved in forward moving direction moving direction along a lawn, a front portion of the cutting unit will perform the largest part of the cutting because the grass of the lawn has a greater height when reaching the front portion of the cutting unit than when reaching the rear portion of the cutting unit. Since the number of ground engaging members is/are arranged in front of the cutting members with respect to a forward mowing direction of the cutting unit, a short distance between the number of ground engaging members and cutting members at the front portion of the cutting unit can be provided. In this manner, conditions are provided for obtaining an even higher uniformity of a length of the grass being cut and an even further reduced risk of scalping when the cutting assembly is moved in the forward moving direction over a lawn.

Optionally, the cutting arrangement comprises a motor configured to rotate the cutting unit around a rotation axis. Since the cutting arrangement comprises the motor, also the motor will move relative to the mounting unit, and thus also relative to the lawnmower body, when cutting arrangement moves relative to the mounting unit along the displacement axis. As a result, a simple and reliable mechanical connection can be provided between the motor and the cutting unit. Moreover, a cutting assembly is provided having improved conditions for replacing a cutting assembly of a previous type of lawnmower for providing a precision cutting lawnmower of the previous type of lawnmower in a cost-efficient manner, for example when wanting to cut the grass of demanding lawns, such as the grass of a golf course, or the like.

Optionally, the cutting unit is configured to rotate around a rotation axis during operation of the cutting unit, and wherein the rotation axis is arranged in front of the displacement axis with respect to a forward mowing direction of the cutting unit. Thereby, it can be ensured that the cutting arrangement can move in an efficient and reliable manner relative to the mounting unit to cut grass with high precision also in cases where undulated ground surfaces are being cut.

Optionally, the number of ground engaging members comprises at least one ground engaging wheel. Thereby, it can be further ensured that the number of ground engaging members can follow a contour of a ground surface in an efficient and reliable manner during movement of the cutting assembly over the ground surface. As a result, it can be further ensured that the cutting arrangement can be displaced in an efficient manner along the displacement axis during movement of the cutting assembly over the ground surface.

Optionally, each ground engaging member of the number of ground engaging members has a convex shape in a direction being perpendicular to a forward mowing direction of the cutting assembly and parallel to a flat surface when the cutting assembly is positioned in an upright use position on the flat surface. Thereby, it can be further ensured that the number of ground engaging members can follow a contour of a ground surface in an efficient and reliable manner also when the cutting assembly is moved along a non-straight moving path over a ground surface, such as when a lawnmower comprising the cutting assembly is performing a turn.

Optionally, the cutting unit comprises a cutting disc and a number of cutting members pivotally arranged at a periphery of the cutting disc. Thereby, a cutting assembly is provided having conditions for cutting grass in an energy efficient manner. Moreover, a safer and more reliable cutting assembly can be provided because a cutting member of the number of cutting members may pivot upon impact with an object, such as a stone, stick, or a limb of a human or animal.

Optionally, the cutting arrangement comprises a cutting height adjustment mechanism allowing a change of a vertical distance between the number of ground engaging members and the cutting unit. Thereby, a more user-friendly cutting assembly is provided allowing a user to set the cutting height of the cutting assembly simply by changing the vertical distance between the number of ground engaging members and the cutting unit.

Optionally, the cutting arrangement comprises an electrical height adjustment mechanism controllable to provide different vertical distances between the number of ground engaging members and the cutting unit. Thereby, an even more user-friendly cutting assembly is provided allowing a user to set the cutting height of the cutting assembly for example using an input unit. Moreover, conditions are provided for an automatic control of the cutting height for example based on input from a communication device, one or more sensors, and/or one or more positioning units of the lawnmower.

According to a second aspect of the invention, the object is achieved by a lawnmower comprising a lawnmower body and a cutting assembly according to some embodiments of the present disclosure, wherein the cutting assembly is mounted to the lawnmower body.

Since the lawnmower comprises a cutting assembly according to some embodiments, a lawnmower is provided having conditions for cutting grass with high precision to obtain a high uniformity of a length of the grass being cut, also in cases where undulated ground surfaces are being cut. Moreover, a lawnmower is provided having a significantly reduced risk of scalping during operation of the cutting assembly, also in cases where undulated ground surfaces are being cut.

As a further result, a lawnmower is provided having conditions for cutting grass to a low cutting height, while obtaining a high uniformity of a length of the grass being cut and a low risk of scalping.

Furthermore, a lawnmower is provided having conditions and characteristics suitable for being manufactured and assembled in a cost-efficient manner. This is because the lawnmower may be provided by starting with a previous type of lawnmower and replacing the cutting assembly thereof with the cutting assembly according to the embodiments of the present disclosure. Thus, in this manner, a precision cutting lawnmower can be provided in a cost-efficient manner from the previous type of lawnmower, for example when wanting to cut the grass of demanding lawns, such as the grass of a golf course, or the like.

Accordingly, a lawnmower is provided overcoming, or at least alleviating, at least some of the above-mentioned problems and drawbacks. As a result, the above-mentioned object is achieved.

Optionally, the lawnmower comprises at least three ground engaging wheels, and wherein the cutting assembly is mounted to the lawnmower such that at least a portion of the cutting unit is arranged above an area delimited by lines drawn between ground engaging portions of the at least three ground engaging wheels when the lawnmower is positioned in an upright use position on a flat horizontal surface. Thereby, a lawnmower is provided having conditions for cutting grass in a safe and reliable manner with high precision, while having no, or at least a low, dependency of a tolerance chain between the at least three ground engaging wheels of the lawnmower and the cutting unit of the cutting assembly.

Optionally, the lawnmower comprises at least three ground engaging wheels, and wherein the cutting assembly is mounted to the lawnmower such that at least a portion of the cutting unit can be seen inside an area delimited by lines drawn between ground engaging portions of the at least three ground engaging wheels when viewed in a direction coinciding with a rotation axis of the cutting unit. Thereby, a lawnmower is provided having conditions for cutting grass in a safe and reliable manner with high precision, while having no, or at least a low, dependency of a tolerance chain between the at least three ground engaging wheels of the lawnmower and the cutting unit of the cutting assembly.

Optionally, the lawnmower comprises at least three ground engaging wheels, and wherein the cutting assembly is mounted to the lawnmower such that a rotation axis of the cutting unit intersects an area delimited by lines drawn between ground engaging portions of the at least three ground engaging wheels. Thereby, a lawnmower is provided having conditions for cutting grass in a safe and reliable manner with high precision, while having no, or at least a low, dependency of a tolerance chain between the at least three ground engaging wheels of the lawnmower and the cutting unit of the cutting assembly.

Optionally, a ground engaging contact between the number of ground engaging members and a flat horizontal surface supports more than 80%, or more than 90%, of the weight of the cutting arrangement when the lawnmower is positioned in an upright use position on the flat horizontal surface. Thereby, it can be ensured that the cutting arrangement can move relative to the mounting unit in an efficient manner along the displacement axis upon operation of the cutting assembly. Moreover, a cutting assembly is provided in which the cutting arrangement is less likely to become stuck relative to the mounting unit. As a further result, conditions are provided for obtaining a high uniformity of a length of the grass being cut and a low risk of scalping.

Optionally, the lawnmower is a self-propelled autonomous robotic lawnmower. Thereby, a robotic lawnmower is provided having conditions for cutting grass with high precision to obtain a high uniformity of a length of the grass being cut, also in cases where undulated ground surfaces are being cut. Moreover, a robotic lawnmower is provided having a significantly reduced risk of scalping during operation of the cutting assembly, also in cases where undulated ground surfaces are being cut.

As a further result, a robotic lawnmower is provided having conditions for cutting grass to a low cutting height, while obtaining a high uniformity of a length of the grass being cut and a low risk of scalping.

Furthermore, a robotic lawnmower is provided having conditions and characteristics suitable for being manufactured and assembled in a cost-efficient manner. This is because the lawnmower may be provided by starting with a previous type of robotic lawnmower and replacing the cutting assembly thereof with the cutting assembly according to the embodiments of the present disclosure. Thus, in this manner, a precision cutting robotic lawnmower can be provided in a cost-efficient manner from the previous type of robotic lawnmower, for example when wanting to cut the grass of demanding lawns, such as the grass of a golf course, or the like.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a perspective view of an underside a lawnmower according to some embodiments of the present disclosure,
Fig. 2 illustrates a perspective view of a cutting assembly of the lawnmower illustrated in Fig. 1,
Fig. 3 illustrates a side view of the cutting assembly according to the embodiments illustrated in Fig. 1 and Fig. 2,
Fig. 4 illustrates a first section drawing of the cutting assembly according to the embodiments illustrated in Fig. 1 - Fig. 3,
Fig. 5 illustrates a second section drawing of the cutting assembly according to the embodiments illustrated in Fig. 1 - Fig. 4,
Fig. 6 illustrates a top view of the cutting assembly according to the embodiments illustrated in Fig. 1 - Fig. 5,
Fig. 7 illustrates a perspective view of a cutting arrangement according to some further embodiments,
Fig. 8 illustrates a first side view of the cutting arrangement illustrated in Fig. 7, and
Fig. 9 illustrates a second side view of the cutting arrangement illustrated in Fig. 7.

### DETAILED DESCRIPTION

Aspects of the present invention will now be described more fully. Like numbers refer to like elements throughout. Well-known functions or constructions will not necessarily be described in detail for brevity and/or clarity.

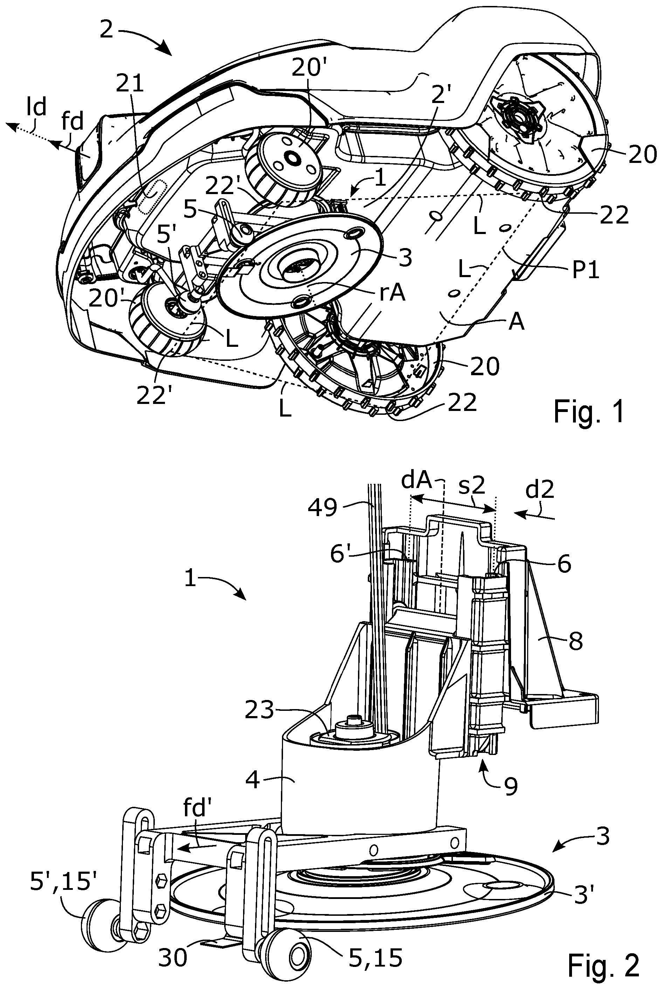

**Fig. 1** illustrates a perspective view of an underside a lawnmower 2 according to some embodiments of the present disclosure. According to the illustrated embodiments, the lawnmower 2 is a self-propelled autonomous robotic lawnmower, i.e. a lawnmower 2 capable of navigating and operating an area in an autonomous manner in an area without the intervention or the direct control of a user. For reasons of brevity and clarity, the self-propelled autonomous robotic lawnmower 2 is in some places herein referred to as "the robotic lawnmower 2" or simply "the lawnmower 2". According to further embodiments, the lawnmower 2 may be another type of lawnmower, such as a walk-behind mower or a push mower. According to the embodiments herein, the lawnmower 2 is a small or mid-sized lawnmower 2 configured to be used to cut grass in areas used for aesthetic and recreational purposes, such as gardens, parks, city parks, sports fields, lawns around houses, apartments, commercial buildings, offices, and the like.

The lawnmower 2 comprises a lawnmower body 2' and a number of lawnmower support members 22, 22' each configured to abut against a ground surface in a first plane P1 during operation of the lawnmower 2 to support the lawnmower body 2'. The lawnmower body 2', as referred to herein, may also be referred to as a lawnmower chassis. The first plane P1 will extend along a ground surface when the lawnmower 2 is positioned on a flat ground surface in an intended use position thereon.

According to the illustrated embodiments, the lawnmower support members 22, 22' are wheels 22, 22' of the lawnmower 2. According to the illustrated embodiments, the lawnmower 2 comprises four wheels 22, 22', namely two drive wheels 22 and two support wheels 22'. The drive wheels 22 of the lawnmower 2 may each be powered by an electrical motor of the lawnmower 2 to provide motive power and/or steering of the lawnmower 2.

In Fig. 1, a longitudinal direction ld of the lawnmower 2 is indicated. The longitudinal direction ld of the lawnmower 2 extends in a longitudinal plane of the lawnmower 2. The longitudinal plane is parallel to the first plane P1. The longitudinal direction ld of the lawnmower 2 is thus parallel to the first plane P1 and thus also to a ground surface when the lawnmower 2 is positioned onto a flat ground surface in an intended use position. Moreover, the longitudinal direction ld of the lawnmower 2 is parallel to a forward direction fd of the lawnmower 2 as well as a reverse direction of the lawnmower 2. The reverse direction is opposite to the forward direction fd. The forward direction fd of the lawnmower 2 may also be referred to as a forward moving direction fd of the lawnmower 2. Likewise, the reverse direction of the lawnmower 2 may also be referred to as a reverse moving direction of the lawnmower 2.

According to the illustrated embodiments, the drive wheels 22 of the lawnmower 2 are non-steered wheels having a fix rolling direction in relation to the lawnmower body 2'. The respective rolling direction of the drive wheels 22 of the lawnmower 2 is substantially parallel to the longitudinal direction ld of the lawnmower 2. According to the illustrated embodiments, the support wheels 22' are non-driven wheels. Moreover, according to the illustrated embodiments, the support wheels 22' can pivot around a respective pivot axis such that the rolling direction of the respective support wheel 22' can follow a travel direction of the lawnmower 2.

As understood from the above, when the drive wheels 22, 22' of the lawnmower 2 are rotated at the same rotational velocity in a forward rotational direction, and no wheel slip is occurring, the lawnmower 2 will move in the forward direction fd indicated in Fig. 1. Likewise, when the drive wheels 22, 22' of the lawnmower 2 are rotated at the same rotational velocity in a reverse rotational direction, and no wheel slip is occurring, the lawnmower 2 will move in the reverse direction.

According to the illustrated embodiments, the lawnmower 2 may be referred to as a four-wheeled rear wheel driven lawnmower 2. According to further embodiments, the lawnmower 2 may be provided with another number of wheels 22, 22', such as three wheels. Moreover, according to further embodiments, the lawnmower 2 may be provided with another configuration of driven and non-driven wheels, such as a front wheel drive or an all-wheel drive.

According to the illustrated embodiments, the lawnmower 2 comprises a control arrangement 21. The control arrangement 21 may be configured to control propulsion of the lawnmower 2, and steer the lawnmower 2, by controlling electrical motors of the lawnmower 2 arranged to drive the drive wheels 22 of the lawnmower 2. According to further embodiments, the control arrangement 21 may be configured to steer the lawnmower 2 by controlling the angle of steered wheels of the lawnmower 2. According to still further embodiments, the robotic lawnmower may be an articulated robotic lawnmower, wherein the control arrangement 21 may be configured to steer the robotic lawnmower by controlling the angle between frame portions of the articulated robotic lawnmower.

The control arrangement 21 may be configured to control propulsion of the lawnmower 2 and may be configured to steer the lawnmower 2 so as to navigate the lawnmower 2 in an area to be operated. The lawnmower 2 may further comprise one or more sensors arranged to sense a magnetic field of a wire, and/or one or more positioning units, and/or one or more sensors arranged to detect an impending or ongoing collision event with an object. In addition, the lawnmower 2 may comprise a communication unit connected to the control arrangement 21. The communication unit may be configured to communicate with a remote communication unit to receive instructions therefrom and/or to send information thereto. The communication may be performed wirelessly over a wireless connection such as the internet, or a wireless local area network (WLAN), or a cellular network, or a wireless connection for exchanging data over short distances using short-wavelength, i.e. ultra-high frequency (UHF) radio waves in the industrial, scientific, and medical (ISM) band from 2.4 to 2.486 GHz.

The control arrangement 21 may be configured to control propulsion of the lawnmower 2, and steer the lawnmower 2, so as to navigate the lawnmower 2 in a systematic and/or random pattern to ensure that an area is completely covered, using input from one or more of the above-described sensors and/or units. Furthermore, the lawnmower 2 may comprise one or more batteries arranged to supply electricity to components of the lawnmower 2. As an example, the one or more batteries may be arranged to supply electricity to electrical motors of the lawnmower 2, such as one or more electric propulsion motors, by an amount controlled by the control arrangement 21. The lawnmower 2 comprises a cutting assembly 1. The cutting assembly 1 is configured to cut vegetation, such as grass, as is further explained herein.

**Fig. 2** illustrates a perspective view of the cutting assembly 1 of the lawnmower 2 illustrated in Fig. 1. Below, simultaneous reference is made to Fig. 1 and Fig. 2, if not indicated otherwise. The cutting assembly 1 is configured to be mounted to a lawnmower 2. In more detail, as can be seen in Fig. 2, the cutting assembly 1 comprises a mounting unit 8. The mounting unit 8 of the cutting assembly 1 illustrated in Fig. 2, is thus mounted to the lawnmower body 2' of the lawnmower 2 illustrated in Fig. 1. In other words, the mounting unit 8 of the cutting assembly 1 illustrated in Fig. 2 is configured to be mounted to a lawnmower body 2' of the lawnmower 2 illustrated in Fig. 1.

As is further explained herein, the cutting assembly 1 according to the present disclosure may replace the cutting arrangement of a previous type of lawnmower. That is, a user may remove the previous cutting arrangement of a lawnmower 2 and install the cutting assembly 1 according to the present disclosure by mounting the mounting unit 8 of the cutting assembly 1 to the lawnmower body 2' of the lawnmower 2. The mounting unit 8 of the cutting assembly 1 may be designed to fit into a previous mounting interface of a previous type of lawnmower.

The cutting assembly 1 is associated with a forward mowing direction fd'. The forward mowing direction fd' is a mowing direction in which the cutting assembly 1 is configured to be moved over a ground surface upon propulsion of a lawnmower 2 in the forward moving direction fd of the lawnmower 2. The cutting assembly 1 is configured to be mounted to the lawnmower body 2' of the lawnmower 2 such that the forward mowing direction fd' of the cutting assembly 1 coincides with the forward mowing direction fd of the lawnmower 2.

The cutting arrangement 4 comprises a cutting unit 3 and a number of ground engaging members 5, 5' configured to abut against a ground surface during operation of the cutting assembly 1. According to the illustrated embodiments, the cutting arrangement 4 comprises two ground engaging members 5, 5' configured to abut against a ground surface during operation of the cutting assembly 1. However, according to further embodiments, the cutting assembly 1 may comprise another number of ground engaging members 5, 5' configured to abut against a ground surface during operation of the cutting assembly 1, such as one, three, four, or the like. The number of ground engaging members 5, 5' of the cutting assembly 1 is separate from the lawnmower support members 22, 22' of the lawnmower 2 indicated in Fig. 1.

Moreover, according to the illustrated embodiments, the cutting arrangement 4 comprises a motor 23 configured to rotate the cutting unit 3 around a rotation axis rA. According to the illustrated embodiments, the motor 23 is an electric motor. Moreover, according to the illustrated embodiments, the cutting unit 3 comprises a cutting disc 3' and a number of cutting members 30 pivotally arranged at a periphery of the cutting disc 3'. According to further embodiments, the cutting unit 3 may be another type of cutting unit, such as a cutting unit comprising one or more cutting arms, or the like.

The cutting assembly 1 comprises a cable arrangement 49 connected to the motor 23. The cable arrangement 49 comprises an electrical connector configured to be inserted into an electrical connector of the lawnmower 2 illustrated in Fig. 1. The cable arrangement 49 is configured to transfer electricity between an electric power supply of the lawnmower 2, such as one or more batteries of the lawnmower 2, and the motor 23 of the cutting assembly 1. The electrical connector of the cable arrangement 49, as well as the electrical connector of the lawnmower 2, are not illustrated in Fig. 1 and Fig. 2 for reasons of brevity and clarity.

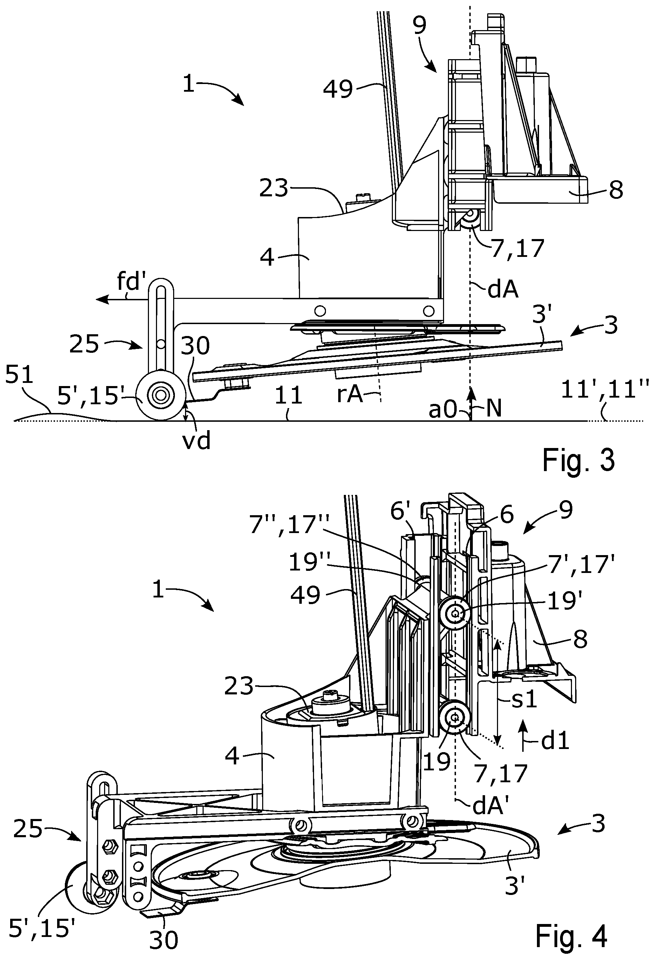

**Fig. 3** illustrates a side view of the cutting assembly 1 according to the embodiments illustrated in Fig. 1 and Fig. 2. In Fig. 3, the cutting assembly 1 is illustrated as positioned such that the number of ground engaging members 5, 5' abut against a ground surface 11. Below, simultaneous reference is made to Fig. 1 - Fig. 3, if not indicated otherwise.

As is illustrated in Fig. 2 and Fig. 3, the cutting assembly 1 comprises a connection arrangement 9. As is further explained herein, the cutting arrangement 4 is linearly displaceably arranged relative to the mounting unit 8 via the connection arrangement 9 along a displacement axis dA to allow the number of ground engaging members 5, 5' to follow a contour of a ground surface 11 during operation of the cutting assembly 1.

Thereby, a cutting assembly 1 is provided having conditions for cutting with high precision to obtain a high uniformity of a length of the grass being cut, also in cases where undulated ground surfaces 11 are being cut. This is because forces derived from a ground engaging contact between the number of ground engaging members 5, 5' and a ground surface 11 can move the cutting arrangement 4, and thereby also the cutting unit 3, relative to the lawnmower body 2' to follow the contour of the ground surface 11 during operation of the cutting assembly 1.

That is, in the example illustrated in Fig. 3, a small bump 51 is illustrated in front of the cutting assembly 1. When the ground engaging members 5, 5' reaches the bump 51, the engaging contact between the number of ground engaging members 5, 5' and the bump 51 will displace the cutting arrangement 4, including the cutting unit 3, along the displacement axis dA to allow the cutting unit 3 to follow a contour of the ground surface 11 in a manner independent of, or at least less dependent on, the positions of the lawnmower support members 22, 22' of the lawnmower 2 indicated in Fig. 1.

Furthermore, since the cutting assembly 1 is allowed to follow a contour of a ground surface 11 by being linearly displaced along the displacement axis dA, a cutting assembly 1 is provided having a significantly reduced risk of scalping during operation of the cutting assembly 1, i.e., a reduced risk of an impact between a cutting member 30 of the cutting unit 3 and the ground surface 11, also in cases where undulated ground surfaces 11 are being cut.

In addition, a precise cutting can be performed with a lower risk of scalping because a significantly lower tolerance chain can be obtained between the number of ground engaging members 5, 5' and the cutting unit 3 as compared to a tolerance chain between lawnmower support wheels and a cutting unit of a traditional lawnmower.

**Fig. 4** illustrates a first section drawing of the cutting assembly 1 according to the embodiments illustrated in Fig. 1 - Fig. 3. In Fig. 4, the cutting arrangement 4 of the cutting assembly 1 is illustrated in a first position relative to the mounting unit 8 of the cutting assembly 1.

As is best seen in Fig. 4, according to the illustrated embodiments, the connection arrangement 9 comprises a number of rails 6, 6' each attached to the mounting unit 8 and a number of followers 7, 7', 7" each attached to the cutting arrangement 4. However, according to further embodiments, the connection arrangement 9 may comprise a number of rails 6, 6' attached to the cutting arrangement 4 and a number of followers 7, 7', 7" attached to the mounting unit 8.

In more detail, according to the illustrated embodiments, the connection arrangement 9 comprises two rails 6, 6' attached to the mounting unit 8. Moreover, as is best seen in Fig. 2, the two rails 6, 6' are arranged at a distance s2 from each other measured in a direction d2 perpendicular to the displacement axis dA. Moreover, in more detail, according to the illustrated embodiments, the two rails 6, 6' are arranged at a distance s2 from each other measured in a direction d2 perpendicular to the forward mowing direction fd' of the cutting assembly 1.

According to further embodiments, the connection arrangement 9 may comprise two rails 6, 6' arranged at a distance from each other measured in a direction parallel to the forward mowing direction fd' of the cutting assembly 1. Furthermore, the connection arrangement 9 of the cutting assembly 1 may comprise another number of rails 6, 6' than two, such as one, three, four, or the like.

According to the illustrated embodiments, the connection arrangement 9 comprises two followers 7, 7', 7" arranged in each rail 6, 6'. According to further embodiments, the cutting assembly 1 may comprise another number of followers 7, 7', 7" arranged in each rail 6, 6', such as one, three, four, or the like.

Thus, the connection arrangement 9 according to the illustrated embodiments comprises four followers 7, 7', 7" in total. However, in Fig. 4, one of the followers is hidden behind other components of the cutting assembly 1. As is indicated in Fig. 4, the two followers 7, 7' in a rail 6 are arranged a distance s1 from each other measured in a direction d1 parallel to the displacement axis dA.

Due to these features, a rigid connection arrangement 9 is provided having conditions for holding the cutting arrangement 4 relative to the mounting unit 8 in an efficient and reliable manner upon linear displacement of the cutting arrangement 4 relative to the mounting unit 8 along the displacement axis dA. As a further result thereof, conditions are provided for obtaining a high uniformity of a length of the grass being cut by the cutting unit 3 and a lower risk of scalping.

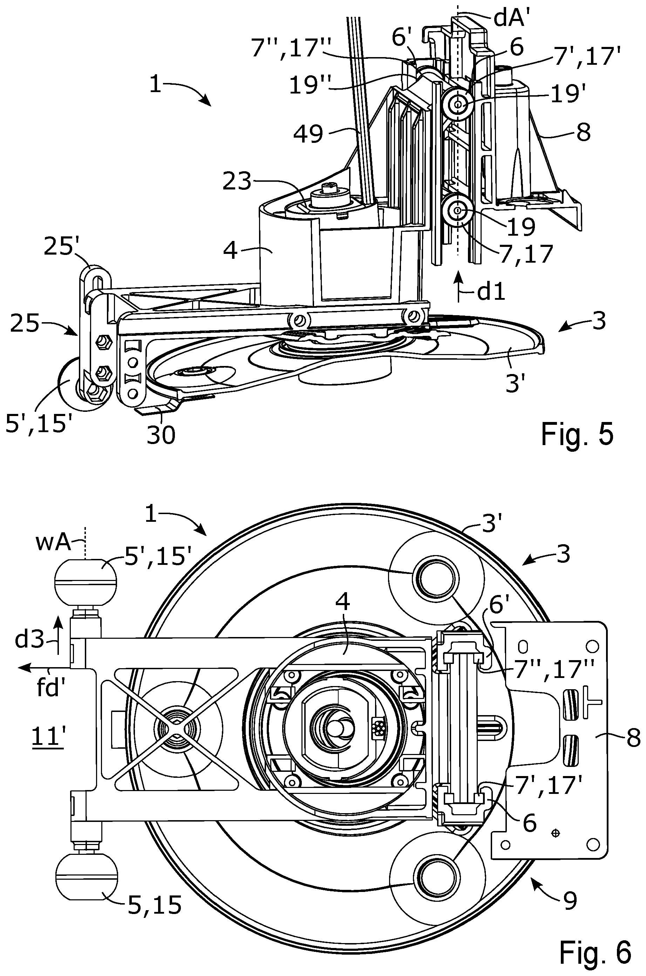

**Fig. 5** illustrates a second section drawing of the cutting assembly 1 according to the embodiments illustrated in Fig. 1 - Fig. 4. In Fig. 5, the cutting arrangement 4 of the cutting assembly 1 is illustrated in a second position relative to the mounting unit 8 of the cutting assembly 1. As seen when comparing Fig. 4 and Fig. 5, the cutting unit 3 of the cutting assembly 1 is closer to the mounting unit 8 when the cutting arrangement 4 is in the second position relative to the mounting unit 8 than when the cutting arrangement 4 is in the first position relative to the mounting unit 8.

Since the mounting unit 8 is configured to be mounted to a lawnmower body 2' of a lawnmower 2, as is illustrated in Fig. 1, the cutting unit 3 will also be closer to the lawnmower body 2' when the cutting arrangement 4 is in the second position relative to the mounting unit 8 than when the cutting arrangement 4 is in the first position relative to the mounting unit 8. Thus, according to the illustrated embodiments, the cutting unit 3 is allowed to move in directions to and from the lawnmower body 2' when following the contour of a ground surface.

As can be seen in Fig. 3 - Fig. 5, according to the illustrated embodiments, the connection arrangement 9 comprises followers 7, 7', 7" in the form of wheels 17, 17', 17". However, according to further embodiments, the connection arrangement 9 may comprise one or more other type of followers, such as one or more sliding members, or the like.

Moreover, as is indicated in Fig. 4 and Fig. 5, according to the illustrated embodiments, each wheel 17, 17', 17" comprises a ball bearing 19, 19', 19". Thereby, a durable connection arrangement 9 is provided capable of ensuring that the cutting arrangement 4 can move relative to the mounting unit 8 in an efficient manner along the displacement axis dA upon operation of the cutting assembly 1.

According to the illustrated embodiments, there is a small play between rolling surfaces of the wheels 17, 17', 17" and abutment surfaces of the rails 6, 6'. In this manner, it can be ensured that the wheels 17, 17', 17" can roll inside the rails 6, 6' in an efficient manner.

In Fig. 3, a flat surface 11' is indicated in dotted lines. According to the embodiments illustrated in Fig. 3, the flat surface 11' is horizontal. The dotted lines indicated in Fig. 3 can thus be said to represent a flat surface 11' as well as a flat horizontal surface 11". Below, simultaneous reference is made to Fig. 1 - Fig. 5, if not indicated otherwise. According to the illustrated embodiments, the cutting assembly 1 is configured to be mounted to a lawnmower 2 such that the displacement axis dA is substantially parallel to a surface normal N of a flat surface 11' when the lawnmower 2 is positioned in an upright use position on the flat surface 11'. In other words, according to the illustrated embodiments, the cutting assembly 1 is configured to be mounted to a lawnmower 2 such that the displacement axis dA is substantially perpendicular to a flat surface 11' when the lawnmower 2 is positioned in an upright use position on the flat surface 11'. According to embodiments herein, the cutting assembly 1 is configured to be mounted to a lawnmower 2 such that an angle a0 between the displacement axis dA and a surface normal N of a flat surface 11' is less than 15 degrees, or is less than 7 degrees, when the lawnmower 2 is positioned in an upright use position on the flat surface 11'.

As understood from the above, the mounting unit 8 of the cutting assembly 1 is configured to be mounted to a lawnmower body 2' of a lawnmower 2 such that an angle a0 between the displacement axis dA and a surface normal N of a flat surface 11' is less than 15 degrees, or is less than 7 degrees, when the lawnmower 2 is positioned in an upright use position on the flat surface 11'. Moreover, when mounted, according to embodiments herein, the lawnmower 2 comprising the cutting assembly 1 comprises a cutting assembly 1 mounted to the lawnmower 2 such that an angle a0 between the displacement axis dA and a surface normal N of a flat surface 11' is less than 15 degrees, or is less than 7 degrees, when the lawnmower 2 is positioned in an upright use position on the flat surface 11'.

This also means that if a lawnmower 2 comprising the cutting assembly 1 according to the illustrated embodiments is positioned in an upright use position on a flat horizontal surface 11", a ground engaging contact between the number of ground engaging members 5, 5' and the flat horizontal surface 11" supports substantially the entire weight of the cutting arrangement 4 of the cutting assembly 1. According to further embodiments, the cutting assembly 1 may be configured such that a ground engaging contact between the number of ground engaging members 5, 5' and a flat horizontal surface 11" supports more than 80%, or more than 90%, of the weight of the cutting arrangement 4 when a lawnmower 2 comprising the cutting assembly 1 is positioned in an upright use position on the flat horizontal surface 11".

Due to these features, it can be ensured that the cutting arrangement 4 can move relative to the mounting unit 8 in an efficient manner along the displacement axis dA upon operation of the cutting assembly 1. Moreover, a cutting assembly 1 is provided in which the cutting arrangement 4 is less likely to become stuck relative to the mounting unit 8. In particular, due to these features, it can be ensured that the cutting arrangement 4 can move in a direction away from the mounting unit 8, i.e., in a direction towards a ground surface 11, by gravity in an efficient manner. As a further result, conditions are provided for obtaining a high uniformity of a length of the grass being cut and a low risk of scalping.

As is best seen in Fig. 3, according to the illustrated embodiments, the rotation axis rA of the cutting unit 3 is arranged in front of the displacement axis dA with respect to the forward mowing direction fd' of the cutting assembly 1. In other words, according to the illustrated embodiments, the displacement axis dA of the connection arrangement 9 is arranged behind the rotation axis rA of the cutting unit 3 with respect to the forward mowing direction fd' of the cutting assembly 1. However, according to further embodiments, the connection arrangement 9 of the cutting assembly 1 may be configured such that the displacement axis dA has another location. As an example, according to some embodiments, the connection arrangement 9 of the cutting assembly 1 may be configured such that the displacement axis dA thereof is adjacent to the rotation axis rA of the cutting unit 3, and/or such that the displacement axis dA thereof extends through at least a portion of the motor 23 of the cutting assembly 1.

Moreover, the cutting unit 3 is arranged with a small positive inclination angle of approximately 4 degrees. A positive inclination angle of a cutting unit 3 of approximately 4 degrees means that a front portion of the cutting unit 3 is closer to a flat horizontal surface 11" than a rear portion of the cutting unit 3 as seen relative to the forward mowing direction fd', and that the angle between the rotation axis rA of the cutting unit 3 and the flat horizontal surface 11" is approximately 86 degrees, when a lawnmower 2 comprising the cutting assembly 1 is positioned in an upright use position onto the flat horizontal surface 11". According to further embodiments, the cutting unit 3 of the cutting assembly 1 may comprise a positive inclination angle within the range of 0 - 9 degrees. Preferably, when performing high precision cutting, the cutting unit 3 of the cutting assembly 1 may be set to comprise positive inclination angle within the range of 0.5 - 3 degrees or may be set to comprise positive inclination angle within the range of 1 - 2 degrees.

According to the illustrated embodiments, the number of ground engaging members 5, 5' are arranged in front of the rotation axis rA with respect to the forward mowing direction fd' of the cutting assembly 1. In other words, the rotation axis rA of the cutting unit 3 is arranged between the number of ground engaging members 5, 5' and the displacement axis dA. Furthermore, according to the illustrated embodiments, the number of ground engaging members 5, 5' are arranged in front of the cutting members 30 with respect to the forward mowing direction fd' of the cutting assembly 1 and in close proximity to a front portion of the cutting unit 3 as seen relative to the forward mowing direction fd' of the cutting assembly 1. Due to these features, conditions are provided for obtaining an even higher uniformity of a length of the grass being cut and an even further reduced risk of scalping when the cutting assembly 1 is moved in the forward moving direction fd' over a lawn.

In Fig. 3, a vertical distance vd between the number of ground engaging members 5, 5' and the cutting unit 3 is indicated. The vertical distance vd can be measured in a direction parallel to a surface normal N of a flat surface 11' when the cutting assembly 1 is positioned in an upright use position on the flat surface 11'. This vertical distance vd substantially corresponds cutting height obtained by the cutting unit 3 during operation of the cutting assembly 1. The features of the cutting assembly 1 according to the present disclosure allows for cutting at small cutting heights while obtaining a low risk of scalping. Therefore, the cutting assembly 1 according to the present disclosure may be used when wanting to cut delicate and demanding areas, such as golf courses, or the like.

According to the illustrated embodiments, the cutting arrangement 4 comprises a cutting height adjustment mechanism 25 allowing a change of the vertical distance vd between the number of ground engaging members 5, 5' and the cutting unit 3. The cutting height adjustment mechanism 25 allows the change of the vertical distance vd between the number of ground engaging members 5, 5' and the cutting unit 3 by allowing a change of the vertical position of the number of ground engaging members 5, 5' relative to the cutting arrangement 4. According to the embodiments illustrated in Fig. 1 - Fig. 5, the cutting height adjustment mechanism 25 is a mechanical cutting height adjustment mechanism allowing the change in cutting height by allowing a change in a vertical position of a bracket 25' (indicated in Fig. 5) holding a ground engaging member 5, 5' relative to the cutting arrangement 4.

However, as is further explained herein, according to further embodiments, the cutting assembly 1 may comprise an electrical height adjustment mechanism capable of changing of the vertical distance vd between the number of ground engaging members 5, 5' and the cutting unit 3 for changing the cutting height. Such an electrical height adjustment mechanism may comprise one or more of an electric motor, an electric stepper motor, an electric actuator, or the like, for changing the vertical distance vd between the number of ground engaging members 5, 5' and the cutting unit 3. Furthermore, such an electrical height adjustment mechanism may comprise one or more transmission devices such as one or more of a linkage, a threaded rod, or the like. Moreover, such an electrical height adjustment mechanism may be controlled via an input unit which may comprise one or more of a button, a knob, or a touch sensitive screen, or the like, arranged on a lawnmower 2 comprising the cutting assembly 1. As an alternative, or in addition, such an electrical height adjustment mechanism may be controlled by a control arrangement 21 of the lawnmower 2 comprising the cutting assembly 1.

Fig. 6 illustrates a top view of the cutting assembly 1 according to the embodiments illustrated in Fig. 1 - Fig. 5. In Fig. 6, the cutting assembly 1 is illustrated as seen in a direction coinciding with the displacement axis dA indicated in in Fig. 2 - Fig. 5.

As seen in Fig. 1 - Fig. 6, according to the illustrated embodiments, the number of ground engaging members 5, 5' comprises a respective ground engaging wheel 15, 15'. A wheel axis wA of the respective ground engaging wheel 15, 15' is parallel to a flat surface 11' when the cutting assembly 1 is positioned in an upright use position onto the flat surface 11'.

As is best seen in Fig. 6, each ground engaging member 5, 5' of the number of ground engaging members 5, 5' has a convex shape in a direction d3 being perpendicular to the forward mowing direction fd' of the cutting assembly 1, and wherein the direction d3 is parallel to a flat surface 11' when the cutting assembly 1 is positioned in an upright use position on the flat surface 11'. Due to this feature, it can be further ensured that the number of ground engaging members 5, 5' can follow a contour of a ground surface in an efficient and reliable manner also when the cutting assembly 1 is moved along a non-straight moving path over a ground surface, such as when a lawnmower comprising the cutting assembly 1 is performing a turn.

According to further embodiments, the cutting assembly 1 may comprise another type of ground engaging members 5, 5'. As an example, according to some embodiments, the cutting assembly 1 may comprise a number of ground engaging members in the form of one or more support rollers configured to abut against a ground surface 11 during operation of the cutting assembly 1. Also in such embodiments, the one or more support rollers may be arranged in front of the rotation axis rA with respect to the forward mowing direction fd' of the cutting assembly 1. Moreover, such one or more support rollers may be arranged in close proximity to a front portion of the cutting unit 3 as seen relative to the forward mowing direction fd' of the cutting assembly 1. The wording "close proximity" as used herein, may encompass that the distance between the objects referred to is less than 7 cm, or is less than 3 cm.

The following is explained with reference to Fig. 1. As mentioned above, according to the illustrated embodiments, the lawnmower 2 comprises four ground engaging wheels 20, 20'. Moreover, according to the illustrated embodiments, the cutting assembly 1 is mounted to the lawnmower 2 such that at least a portion of the cutting unit 3 is arranged above an area A delimited by lines L drawn between ground engaging portions 22, 22' of the ground engaging wheels 20, 20' of the lawnmower 2 when the lawnmower 2 is positioned in an upright use position on a flat horizontal surface. The area A delimited by the lines L drawn between the ground engaging portions 22, 22' of the ground engaging wheels 20, 20' of the lawnmower 2 coincides with the first plane P1 explained with reference to Fig. 1 above.

However, according to some embodiments, the lawnmower 2 may comprise at least three ground engaging wheels 20, 20', and wherein the cutting assembly 1 is mounted to the lawnmower 2 such that at least a portion of the cutting unit 3 is arranged above an area A delimited by lines L drawn between ground engaging portions 22, 22' of the ground engaging wheels 20, 20' when the lawnmower 2 is positioned in an upright use position on a flat horizontal surface.

Moreover, according to the illustrated embodiments, the cutting assembly 1 is mounted to the lawnmower 2 such that at least a portion of the cutting unit 3 can be seen inside an area A delimited by lines L drawn between ground engaging portions 22, 22' of the ground engaging wheels 20, 20' of the lawnmower 2 when the lawnmower 2 is viewed in a direction coinciding with a rotation axis rA of the cutting unit 3.

Like above, according to some further embodiments, the lawnmower 2 may comprise at least three ground engaging wheels 20, 20', and wherein the cutting assembly 1 is mounted to the lawnmower 2 such that at least a portion of the cutting unit 3 can be seen inside an area A delimited by lines L drawn between ground engaging portions 22, 22' of the at least three ground engaging wheels 20, 20' when the lawnmower 2 is viewed in a direction coinciding with a rotation axis rA of the cutting unit 3.

Moreover, according to the illustrated embodiments, the cutting assembly 1 is mounted to the lawnmower 2 such that the rotation axis rA of the cutting unit 3 intersects the area A delimited by lines L drawn between ground engaging portions 22, 22' of the ground engaging wheels 20, 20' of the lawnmower 2.

However, like above, according to further embodiments, the lawnmower 2 may comprise at least three ground engaging wheels 20, 20', and wherein the cutting assembly 1 is mounted to the lawnmower 2 such that a rotation axis rA of the cutting unit 3 intersects an area A delimited by lines L drawn between ground engaging portions 22, 22' of the at least three ground engaging wheels 20, 20'.

According to some embodiments of the present disclosure, the cutting assembly 1 and/or a lawnmower 2 comprising the cutting assembly 1, may comprise a lifting mechanism capable of lifting the cutting arrangement 4 from a ground surface 11 by displacing the cutting arrangement 4 relative to the mounting unit 8. Such a lifting mechanism may for example be used to lift the cutting arrangement 4 from a ground surface 11 when the lawnmower 2 comprising the cutting assembly 1 is to move across areas in which no cutting is wanted, such as when the lawnmower 2 is to move across an area comprising gravel, pavement, paving, or the like.

Such a lifting mechanism may be of mechanical type configured to be operated by a user or may be of electric type. In electric embodiments, the lifting mechanism may comprise one or more of an electric motor, an electric stepper motor, an electric actuator, or the like, for displacing the cutting arrangement 4 relative to the mounting unit 8. Furthermore, such an electric lifting mechanism may comprise one or more transmission devices such as one or more of a linkage, a threaded rod, a belt and pulley arrangement, or the like. Moreover, such an electric lifting mechanism may be controlled via an input unit arranged on a lawnmower 2 comprising the cutting assembly 1. As an example, the input unit may comprise one or more of a button, a knob, or a touch sensitive screen, or the like. As an alternative, or in addition, such a lifting mechanism may be controlled by a control arrangement 21 of the lawnmower 2 comprising the cutting assembly 1.

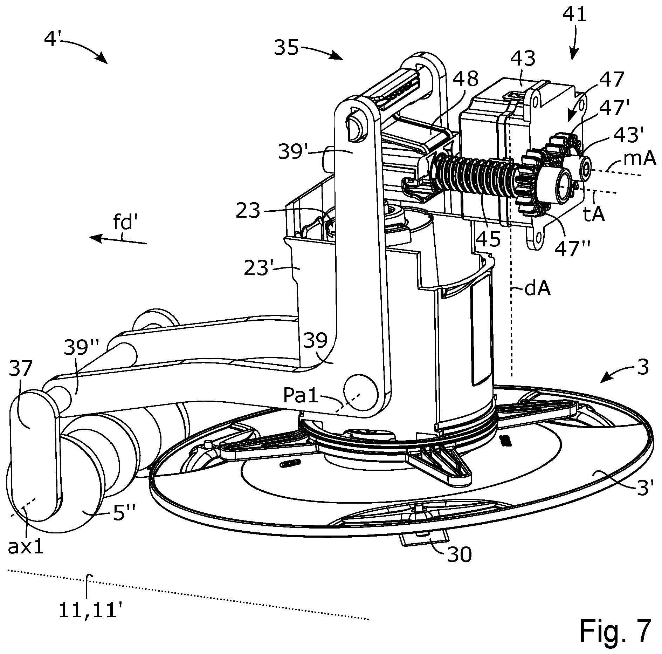

Fig. 7 illustrates a perspective view of a cutting arrangement 4' according to some further embodiments. The lawnmower 2 illustrated in Fig. 1 may comprise a cutting arrangement 4' according to the embodiments illustrated in Fig. 7. In more detail, the cutting arrangement 4' according to the embodiments illustrated in Fig. 7 may be linearly displaceably arranged relative to a mounting unit 8, wherein the mounting unit 8 is attached to the lawnmower body 2' of the lawnmower 2 via a connection arrangement 9 along a displacement axis dA as explained with reference to Fig. 1 - Fig. 6 above. Moreover, the cutting arrangement 4' according to the embodiments illustrated in Fig. 7 may be comprised in a cutting assembly 1 as explained with reference to Fig. 1 - Fig. 6 above.

In this manner, a number of ground engaging members 5" of the cutting arrangement 4' is allowed to follow a contour of a ground surface 11 during operation of the cutting assembly 1. In Fig. 7, the ground surface 11 is schematically indicated in dashed lines.

According to the embodiments illustrated in Fig. 7, the number of ground engaging members 5" of the cutting arrangement 4' comprises one ground engaging member 5" in the form of a ground engaging roller. According to further embodiments, the cutting arrangement 4' may comprise another number of ground engaging rollers and/or or a number of ground engaging wheels. The ground engaging member 5" is rotationally arranged around a rotation axis ax1 relative to a support member 37 of the cutting arrangement 4'.

Also in these embodiments, the cutting arrangement 4' comprises a cutting unit 3 in the form of a cutting disc 3' provided with a number of cutting members 30 pivotally arranged at a periphery of the cutting disc 3'. However, according to further embodiments, the cutting unit 3 may be another type of cutting unit, such as a cutting unit comprising one or more cutting arms, or the like. Moreover, also in these embodiments, the motor 23 is configured to rotate the cutting unit 3 during operation of the cutting arrangement 4'.

According to the embodiments illustrated in Fig. 7, the cutting arrangement 4' comprises an electrical height adjustment mechanism 35 controllable to provide different vertical distances between the number of ground engaging members 5" and a cutting unit 3 of the cutting arrangement 4'. The features, functions, and advantages of the electrical height adjustment mechanism 35 is further explained below.

In Fig. 7, some parts of the cutting arrangement 4' have been omitted, such as guide rails, and the like. However, the cutting arrangement 4' may comprise guide rails which for example may be attached to a structural component 23' of the cutting arrangement 4'. According to the embodiments illustrated in Fig. 7, the structural component 23' is a structural component to which the motor 23 and the cutting unit 3 are arranged.

As understood from the above, the structural component 23' is linearly displaceably arranged relative the lawnmower body 2' of a lawnmower 2 along the displacement axis dA when the cutting arrangement 4' is attached to the lawnmower body 2' via a connection arrangement 9 as explained with reference to Fig. 1 - Fig. 6.

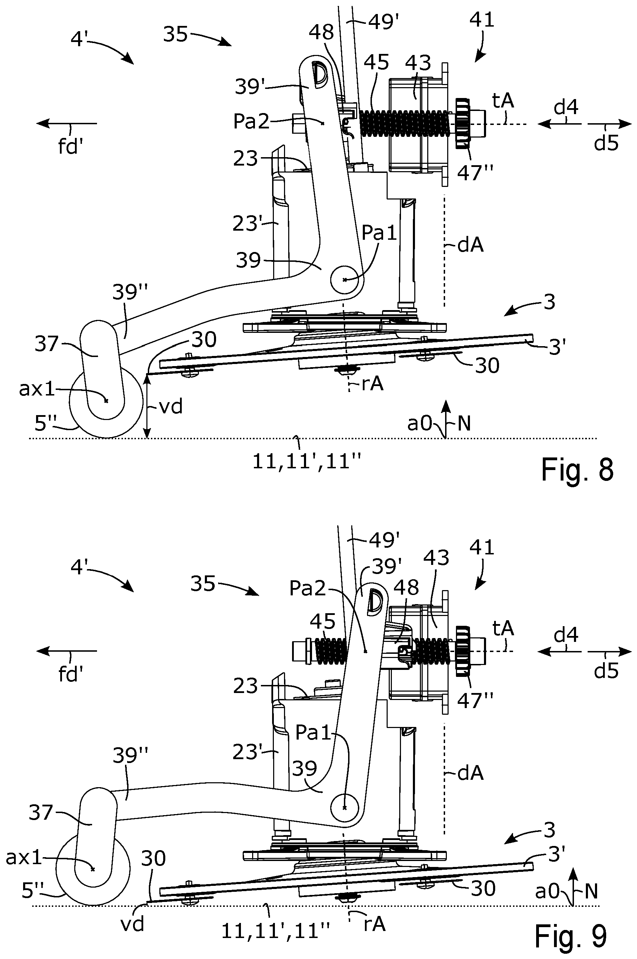

**Fig. 8** illustrates a first side view of the cutting arrangement 4' illustrated in Fig. 7. In Fig. 8, the electrical height adjustment mechanism 35 has lifted the cutting unit 3 to a maximum height position. In the maximum height position, the vertical distance vd between the number of ground engaging members 5" and the cutting unit 3 is maximized.

Below, simultaneous reference is made to Fig. 7 and Fig. 8, if not indicated otherwise. According to the embodiments illustrated in Fig. 7 and Fig. 8, the electrical height adjustment mechanism 35 comprises a link arm unit 39. The link arm unit 39 is pivotally arranged to the structural component 23' around a pivot axis Pa1. According to the illustrated embodiments, the link arm unit 39 is L-shaped. As is further explained below, the electrical height adjustment mechanism 35 comprises a motor assembly 41 configured to adjust the vertical distance vd between the number of ground engaging members 5" and the cutting unit 3 by adjusting the pivot angle of the link arm unit 39 relative to the structural component 23'.

In more detail, as is indicated in Fig. 7, the motor assembly 41 comprises an electric motor 43 and a threaded rod 45. The electric motor 43 and the threaded rod 45 of the motor assembly 41 is attached to the structural component 23' of the cutting arrangement 4'. The threaded rod 45 is rotationally arranged around a rotation axis tA and an output shaft 43' of the electric motor 43 is connected to the threaded rod 45.

According to the illustrated embodiments, the output shaft 43' of the electric motor 43 is connected to the threaded rod 45 via a gear assembly 47. In Fig. 7, a rotation axis mA of the output shaft 43' of the electric motor 43 is indicated. The gear assembly 47 comprises a first gear 47' arranged on the output shaft 43' of the electric motor 43 and a second gear 47" arranged on the threaded rod 45, wherein the second gear 47" engages with the first gear 47'. According to further embodiments, the output shaft 43' of the electric motor 43 may be connected to the threaded rod 45 in another manner, such as via a direct connection or via another type of transmission assembly.

According to the illustrated embodiments, the electric motor 43 is a stepper motor. According to further embodiments, the electric motor 43 may be another type of electric motor.

The cutting arrangement 4' further comprises a threaded collar 48. The threaded collar 48 is attached to a first lever arm portion 39' of the link arm unit 39 at a distance from the pivot axis Pa1 of the link arm unit 39. In more detail, according to the illustrated embodiments, the threaded collar 48 is pivotally attached to a first lever arm portion 39' around a pivot axis Pa2, such that the threaded collar 48 can pivot relative to the first lever arm portion 39' upon pivoting of the link arm unit 39 around the pivot axis Pa1.

The threaded collar 48 comprises radially inner threads configured to engage with radially other threads of the threaded rod 45. In this manner, the threaded collar 48 moves in directions d4, d5 parallel to the rotation axis tA of the threaded rod 45 upon rotation of the threaded rod 45 around the rotation axis tA thereof.

Since the motor assembly 41 is attached to the structural component 23' of the cutting arrangement 4' and since the threaded collar 48 is attached to a first lever arm portion 39' of the link arm unit 39 at a distance from the pivot axis Pa1 of the link arm unit 39, the link arm unit 39 pivots around the pivot axis Pa1 when the threaded rod 45 is rotated around the rotation axis tA by the electric motor 43.

**Fig. 9** illustrates a second side view of the cutting arrangement 4' illustrated in Fig. 7. In Fig. 9, the electrical height adjustment mechanism 35 has lowered the cutting unit 3 to a minimum height position. In the minimum height position, the vertical distance vd between the number of ground engaging members 5" and the cutting unit 3 is minimized.

As seen in Fig. 7 - Fig. 9, the link arm unit 39 comprises a second lever arm portion 39". The support member 37 is attached to a second lever arm portion 39" of the link arm unit 39, wherein the ground engaging member 5" is rotationally arranged on the support member 37 around the rotation axis ax1. Moreover, the link arm unit 39 is configured such that the rotation axis ax1 of the ground engaging member 5" is arranged at a distance from the pivot axis Pa1 of the link arm unit 39.

In this manner, as can be clearly seen when comparing Fig. 8 and Fig. 9, the vertical distance vd between the number of ground engaging members 5" and the cutting unit 3 is changed upon movement of the threaded collar 48 in the directions d4, d5. In other words, the vertical distance vd between the number of ground engaging members 5" and the cutting unit 3 is changed upon rotation of the threaded rod 45 around the rotation axis tA.

Below, simultaneous reference is made to Fig. 1 and Fig. 7 - Fig. 9, if not indicated otherwise. The vertical distance vd can be measured in a direction parallel to a surface normal N of a flat surface 11' when the cutting assembly 1 is positioned in an upright use position on the flat surface 11'. The vertical distance vd may be measured between such a flat surface 11' and a portion of cutting members 30 of the cutting unit 3 located closest to the flat surface 11' as measured in a direction parallel to a surface normal N of a flat surface 11' when the cutting assembly 1 is positioned in an upright use position on the flat surface 11'. The vertical distance vd substantially corresponds to a cutting height obtained by the cutting unit 3 during operation of the cutting assembly 1.

The electric motor 43 of the motor assembly 41 may be controllable to provide various hight positions between the minimum height position illustrated in Fig. 9 and the maximum height position illustrated in Fig. 8. A lawnmower 2 comprising the cutting arrangement 4' according to the embodiments illustrated in Fig. 7 - Fig. 9 may comprise a control arrangement for controlling the operation of the electric motor 43 of the motor assembly 41.

Moreover, the lawnmower 2 comprising the cutting arrangement 4' according to the embodiments illustrated in Fig. 7 - Fig. 9 may comprise an input unit, wherein the control arrangement is configured to control the operation of the electric motor 43 of the motor assembly 41 based on input from the input unit. Purely as examples, the input unit may comprise one or more of a button, a knob, or a touch sensitive screen, or the like.

Furthermore, according to some embodiments, the input unit may comprise a communication device configured to receive data from an external device, wherein the control arrangement may be configured to control the electric motor 43 of the motor assembly 41 based on the data received from the external device. The communication may for example be performed wirelessly over a wireless connection such as the internet, or a wireless local area network (WLAN), or a cellular network, or a wireless connection for exchanging data over short distances using short-wavelength, i.e. ultra-high frequency (UHF) radio waves in the industrial, scientific, and medical (ISM) band from 2.4 to 2.486 GHz.

As a further alternative, or in addition, the input unit may comprise one or more sensors arranged to monitor the surroundings of the lawnmower 2, such as a current height of vegetation, wherein the control arrangement is configured to control the operation of the electric motor 43 of the motor assembly 41 based on the monitored surroundings of the lawnmower 2. Such one or more sensors may for example comprise one or more of a Radio Detection and Ranging (radar) sensor, a Light Detection and Ranging (lidar) sensor, an image capturing unit, such as a camera, an ultrasound sensor, or the like.

As a still further alternative, or in addition, the input unit may comprise one or more positioning units configured to provide a current position estimate of the lawnmower 2, wherein the control arrangement is configured to control the operation of the electric motor 43 of the motor assembly 41 based on the current position estimate of the lawnmower 2. Such one or more positioning units may comprise a space based satellite navigation system such as a Global Positioning System (GPS), The Russian GLObal NAvigation Satellite System (GLONASS), European Union Galileo positioning system, Chinese Compass navigation system, or Indian Regional Navigational Satellite System. As an alternative, or in addition, such one or more positioning units may comprise one or more positioning units utilizing a local reference source, such as a local sender and/or a wire, to provide current position estimates of the lawnmower 2. As a further alternative, or in addition, such one or more positioning units may comprise one or more of a Radio Detection and Ranging (radar) sensor, a Light Detection and Ranging (lidar) sensor, an image capturing unit, such as a camera, an ultrasound sensor, or the like, for obtaining current position estimates of the lawnmower 2.

Since the control arrangement is configured to control the operation of the electric motor 43 of the motor assembly 41 according to such embodiments, the control arrangement controls the vertical distance vd between the number of ground engaging members 5" and the cutting unit 3 and thereby also a cutting height of the cutting arrangement 4'.

The following is a use-example of a lawnmower 2 comprising the cutting arrangement 4' according to the embodiments illustrated in Fig. 7 - Fig. 9. However, the cutting arrangement 4' may be used in another manner than described below.

Simultaneous reference is made to Fig. 1 and Fig. 7 - Fig. 9 below, if not indicated otherwise. When a lawnmower 2 comprising the cutting arrangement 4' is used for cutting grass of a golf course, i.e., a sports field for playing golf, the electric motor 43 of the motor assembly 41 may be controlled to provide a small vertical distance vd between the number of ground engaging members 5" and the cutting unit 3 when the lawnmower 2 is cutting the grass of a particular area of the golf course, such as a green or fairway of the golf course, and may be controlled to provide a greater vertical distance vd between the number of ground engaging members 5" and the cutting unit 3 when the lawnmower 2 is cutting grass outside of the particular area.

In more detail, a golf course normally comprises different areas such as greens, fairways, and rough areas, wherein a fairway is normally located between a green and a rough area. These areas are associated with different cutting height requirements. Purely as examples, the cutting height requirement of a green may be about 3 mm, the cutting height requirement of a fairway may be within the range of 8 - 16 mm, and the cutting height requirement of a rough area may be within the range of 20 - 30 mm. The electric motor 43 of the motor assembly 41 may thus be controlled to provide different vertical distances vd between the number of ground engaging members 5" and the cutting unit 3 based on the area currently being cut.

As indicated above, the vertical distance vd between the number of ground engaging members 5" and the cutting unit 3 may be adjusted by a user via an input unit in the form of a button, a knob, or a touch sensitive screen, or the like, or may be adjusted automatically by the control arrangement for example based on the input from a communication device, one or more sensors, and/or one or more positioning units according to the above.

The vertical distance vd between the number of ground engaging members 5" and the cutting unit 3 may be adjusted automatically when the control arrangement determines that the lawnmower 2 reaches an area having another cutting height requirement and/or when the control arrangement determines that the lawnmower 2 reaches an area having other cutting characteristics, such as another current length of grass. Moreover, the vertical distance vd between the number of ground engaging members 5" and the cutting unit 3 may be adjusted automatically based on grass-type and/or seasonal variations.

Moreover, according to some embodiments, the vertical distance vd between the number of ground engaging members 5" and the cutting unit 3 may be adjusted automatically when the control arrangement determines that the lawnmower 2 reaches, or is about to reach, a ground surface area having one or more height variations. Such one or more height variations may for example be caused by ball indentations, club marks, sprinkler lids, and the like.

The control arrangement may be configured to increase the vertical distance vd between the number of ground engaging members 5" and the cutting unit 3 upon determining that the lawnmower 2 reaches, or is about to reach, a ground surface area having such one or more height variations. In this manner, the risk of scalping can be further reduced. The control arrangement may utilize data from one or more sensors according to the above described to determine when the lawnmower 2 reaches, or is about to reach, a ground surface area having such one or more height variations.

In Fig. 8 and Fig. 9, a cable arrangement 49' of the cutting arrangement 4' is seen. The cable arrangement 49' is connected to the motor 23 configured to rotate the cutting unit 3 and the motor 43 of the electrical height adjustment mechanism 35. The cable arrangement 49' comprises an electrical connector configured to be inserted into an electrical connector of the lawnmower 2 illustrated in Fig. 1. The cable arrangement 49' is configured to transfer electricity between an electric power supply of the lawnmower 2, such as one or more batteries of the lawnmower 2, and the motor 23 configured to rotate the cutting unit 3 and the motor 43 of the electrical height adjustment mechanism 35. The electrical connector of the cable arrangement 49', as well as the electrical connector of the lawnmower 2, are not illustrated in Fig. 1, Fig. 7, Fig. 8, and Fig. 9 for reasons of brevity and clarity.

According to the embodiments illustrated in Fig. 7 - Fig. 9, the rotation axis tA of the threaded rod 45 is substantially perpendicular to the displacement axis dA. Moreover, the threaded rod 45 is positioned at a location above the electric motor 23 as seen relative to the ground surface 11. In this manner, a compact electrical height adjustment mechanism 35 can be provided. Moreover, an electrical height adjustment mechanism 35 is provided having a low risk of clogging of matter, such as clogging of cutting residues, onto various parts of the electrical height adjustment mechanism 35.

According to further embodiments, the threaded rod 45 may be arranged such that the rotation axis tA of the threaded rod 45 has another angle relative to the displacement axis dA. Purely as examples, the threaded rod 45 may be arranged such that the smallest angle between the rotation axis tA of the threaded rod 45 and the displacement axis dA is within the range of 25 - 90 degrees or is within the range of 45 - 90 degrees. Moreover, according to further embodiments, the threaded rod 45 may be positioned at another location than depicted in Fig. 7 - Fig. 9.

In Fig. 7 - Fig. 9, a forward mowing direction fd' of the cutting arrangement 4' is indicated. The cutting arrangement 4' is configured to be mounted to the lawnmower body 2' of the lawnmower 2 such that the forward mowing direction fd' of the cutting arrangement 4' coincides with the forward mowing direction fd of the lawnmower 2 as explained with reference to Fig. 1 - Fig. 6 above.

According to the embodiments illustrated in Fig. 7 - Fig. 9, the rotation axis tA of the threaded rod 45 substantially coincides with the forward mowing direction fd' of the cutting arrangement 4'. According to further embodiments, the threaded rod 45 may be arranged such that the rotation axis tA of the threaded rod 45 is at an angle relative to the forward mowing direction fd' of the cutting arrangement 4'.

Moreover, according to the embodiments illustrated in Fig. 7 - Fig. 9, the pivot axis Pa1 of the link arm unit 39 is perpendicular relative to the forward mowing direction fd' of the cutting arrangement 4'. According to further embodiments, the pivot axis Pa1 of the link arm unit 39 may be arranged at another angle relative to the forward mowing direction fd' of the cutting arrangement 4'.

In Fig. 8 and Fig. 9, a flat horizontal surface 11" is indicated in dotted lines. The dotted lines in Fig. 8 and Fig. 9 can thus be said to represent a ground surface 11, a flat surface 11', and a flat horizontal surface 11". Below, simultaneous reference is made to Fig. 1 and Fig. 7 - Fig. 9, if not indicated otherwise. Also in these embodiments, the cutting arrangement 4' is configured to be mounted to a lawnmower 2 such that the displacement axis dA is substantially parallel to a surface normal N of a flat surface 11' when the lawnmower 2 is positioned in an upright use position on the flat surface 11'. In other words, according to the illustrated embodiments, the cutting arrangement 4' is configured to be mounted to a lawnmower 2 such that the displacement axis dA is substantially perpendicular to a flat surface 11' when the lawnmower 2 is positioned in an upright use position on the flat surface 11'. According to embodiments herein, the cutting arrangement 4' is configured to be mounted to a lawnmower 2 such that an angle a0 between the displacement axis dA and a surface normal N of a flat surface 11' is less than 15 degrees, or is less than 7 degrees, when the lawnmower 2 is positioned in an upright use position on the flat surface 11'.

This also means that if a lawnmower 2 comprising the cutting arrangement 4' according to the illustrated embodiments is positioned in an upright use position on a flat horizontal surface 11", a ground engaging contact between the number of ground engaging members 5" and the flat horizontal surface 11" supports substantially the entire weight of the cutting arrangement 4'. According to further embodiments, the cutting arrangement 4' may be configured such that a ground engaging contact between the number of ground engaging members 5" and a flat horizontal surface 11" supports more than 80%, or more than 90%, of the weight of the cutting arrangement 4 when a lawnmower 2 comprising the cutting arrangement 4' is positioned in an upright use position on the flat horizontal surface 11".

The wording "substantially parallel to", as used herein, may encompass that the angle between the objects referred to is less than 10 degrees, or is less than 7 degrees.

The wording "substantially coincides with", as used herein, may encompass that the angle between the objects referred to is less than 10 degrees, or is less than 7 degrees.

The wording "substantially perpendicular to", as used herein, may encompass that the angle between the objects or vectors referred to is within the range of 80 - 100 degrees or is within the range of 83 - 97 degrees.

The wording "substantially corresponding to", as used herein, may encompass that the aspects, objects, distances, or measurements referred to deviates less than 10% from each other.

## Claims

1. A cutting assembly (1) configured to be mounted to a lawnmower (2) to cut vegetation, the cutting assembly (1) comprising:
- a mounting unit (8) configured to be mounted to a lawnmower body (2') of the lawnmower (2),
- a cutting arrangement (4, 4') comprising a cutting unit (3) and a number of ground engaging members (5, 5', 5") configured to abut against a ground surface (11) during operation of the cutting assembly (1), and
- a connection arrangement (9),
wherein the cutting arrangement (4, 4') is linearly displaceably arranged relative to the mounting unit (8) via the connection arrangement (9) along a displacement axis (dA) to allow the number of ground engaging members (5, 5', 5") to follow a contour of a ground surface (11) during operation of the cutting assembly (1), wherein the connection arrangement (9) comprises a number of rails (6, 6') attached to one of the mounting unit (8) and the cutting arrangement (4, 4') and a number of followers (7, 7', 7") attached to the other of the mounting unit (8) and the cutting arrangement (4, 4'), **characterized in that** the cutting assembly (1) is configured to be mounted to a lawnmower (2) such that an angle (a0) between the displacement axis (dA) and a surface normal (N) of a flat surface (11') is less than 15 degrees, or is less than 7 degrees, when the lawnmower (2) is positioned in an upright use position on the flat surface (11').

2. The cutting assembly (1) according to claim 1, wherein the connection arrangement (9) comprises two or more followers (7, 7', 7") arranged in each rail (6, 6') at a distance (s1) from each other measured in a direction (d1) parallel to the displacement axis (dA).

3. The cutting assembly (1) according to claim 1 or 2, wherein the connection arrangement (9) comprises two rails (6, 6') arranged at a distance (s2) from each other measured in a direction(d2) perpendicular to the displacement axis (dA).

4. The cutting assembly (1) according to any one of the preceeding claims, wherein the connection arrangement (9) comprises followers (7, 7', 7") in the form of wheels (17, 17', 17").

5. The cutting assembly (1) according to claim 4, wherein each wheel (17, 17', 17") comprises a ball bearing (19, 19', 19").

6. The cutting assembly (1) according to any one of the preceding claims, wherein the cutting unit (3) is configured to rotate around a rotation axis (rA) during operation of the cutting unit (3), and wherein the number of ground engaging members (5, 5', 5") is/are arranged in front of the rotation axis (rA) with respect to a forward mowing direction (fd') of the cutting unit (3).

7. The cutting assembly (1) according to any one of the preceding claims, wherein the cutting unit (3) comprises a number of cutting members (30), and wherein the number of ground engaging members (5, 5', 5") is/are arranged in front of the cutting members (30) with respect to a forward mowing direction (fd') of the cutting unit (3).

8. The cutting assembly (1) according to any one of the preceding claims, wherein the cutting arrangement (4, 4') comprises a motor (23) configured to rotate the cutting unit (3) around a rotation axis (rA).

9. The cutting assembly (1) according to any one of the preceding claims, wherein the cutting unit (3) is configured to rotate around a rotation axis (rA) during operation of the cutting unit (3), and wherein the rotation axis (rA) is arranged in front of the displacement axis (dA) with respect to a forward mowing direction (fd') of the cutting unit (3).

10. The cutting assembly (1) according to any one of the preceding claims, wherein the number of ground engaging members (5, 5') comprises at least one ground engaging wheel (15, 15').

11. The cutting assembly (1) according to any one of the preceding claims, wherein each ground engaging member (5, 5') of the number of ground engaging members (5, 5') has a convex shape in a direction (d3) being perpendicular to a forward mowing direction (fd') of the cutting assembly (1) and parallel to a flat surface (11') when the cutting assembly (1) is positioned in an upright use position on the flat surface (11').

12. The cutting assembly (1) according to any one of the preceding claims, wherein the cutting arrangement (4, 4') comprises a cutting height adjustment mechanism (25, 35) allowing a change of a vertical distance (vd) between the number of ground engaging members (5, 5', 5") and the cutting unit (3).

13. The cutting assembly (1) according to any one of the preceding claims, wherein the cutting arrangement (4') comprises an electrical height adjustment mechanism (35) controllable to provide different vertical distances (vd) between the number of ground engaging members (5") and the cutting unit (3).

14. A lawnmower (2) comprising a lawnmower body (2') and a cutting assembly according to any one of the preceding claims, wherein the cutting assembly (1) is mounted to the lawnmower body (2').

## Patentansprüche

1. Schneidanordnung (1), die konfiguriert ist, um an einem Rasenmäher (2) montiert zu werden, um Vegetation zu schneiden, die Schneidanordnung (1) umfassend:
- eine Montageeinheit (8), die konfiguriert ist, um an einem Rasenmäherkörper (2') des Rasenmähers (2) montiert zu werden,
- eine Schneideinrichtung (4, 4'), umfassend eine Schneideinheit (3) und eine Anzahl von Bodeneingriffselementen (5, 5', 5"), die konfiguriert sind, um während eines Betriebs der Schneidanordnung (1) an einer Bodenoberfläche (11) anzuliegen, und
- eine Verbindungseinrichtung (9),
wobei die Schneideinrichtung (4, 4') über die Verbindungseinrichtung (9) entlang einer Verschiebeachse (dA) linear relativ zu der Montageeinheit (8) verschiebbar eingerichtet ist, um der Anzahl von Bodeneingriffselementen (5, 5', 5") zu ermöglichen, während des Betriebs der Schneidanordnung (1) einer Kontur einer Bodenoberfläche (11) zu folgen, wobei die Verbindungseinrichtung (9) eine Anzahl von Schienen (6, 6'), die an einer der Montageeinheit (8) oder der Schneideinrichtung (4, 4') befestigt sind, und eine Anzahl von Mitnehmern (7, 7', 7") umfasst, die an der anderen der Montageeinheit (8) oder der Schneideinrichtung (4, 4') befestigt sind, **dadurch gekennzeichnet, dass** die Schneidanordnung (1) konfiguriert ist, um derart an einem Rasenmäher (2) montiert zu werden, dass ein Winkel (a0) zwischen der Verschiebeachse (dA) und einer Oberflächennormalen (N) einer ebenen Oberfläche (11') weniger als 15 Grad beträgt oder weniger als 7 Grad beträgt, wenn der Rasenmäher (2) in einer aufrechten Gebrauchsposition auf der ebenen Oberfläche (11') positioniert ist.

2. Schneidanordnung (1) nach Anspruch 1, wobei die Verbindungseinrichtung (9) zwei oder mehr Mitnehmer (7, 7', 7") umfasst, die in jeder Schiene (6, 6') in einem Abstand (s1) voneinander eingerichtet sind, gemessen in einer Richtung (d1) parallel zu der Verschiebeachse (dA).

3. Schneidanordnung (1) nach Anspruch 1 oder 2, wobei die Verbindungseinrichtung (9) zwei Schienen (6, 6') umfasst, die in einem Abstand (s2) voneinander eingerichtet sind, gemessen in einer Richtung (d2) senkrecht zu der Verschiebeachse (dA).

4. Schneidanordnung (1) nach einem der vorstehenden Ansprüche, wobei die Verbindungseinrichtung (9) Mitnehmer (7, 7', 7") in der Form von Rädern (17, 17', 17") umfasst.

5. Schneidanordnung (1) nach Anspruch 4, wobei jedes Rad (17, 17', 17") ein Kugellager (19, 19', 19") umfasst.

6. Schneidanordnung (1) nach einem der vorstehenden Ansprüche, wobei die Schneideinheit (3) konfiguriert ist, um während des Betriebs der Schneideinheit (3) um eine Rotationsachse (rA) zu rotieren, und wobei die Anzahl von Bodeneingriffselementen (5, 5', 5") in Bezug auf eine Vorwärtsmährichtung (fd') der Schneideinheit (3) vor der Rotationsachse (rA) eingerichtet ist/sind.

7. Schneidanordnung (1) nach einem der vorstehenden Ansprüche, wobei die Schneideinheit (3) eine Anzahl von Schneidelementen (30) umfasst und wobei die Anzahl von Bodeneingriffselementen (5, 5', 5") in Bezug auf eine Vorwärtsmährichtung (fd') der Schneideinheit (3) vor den Schneidelementen (30) eingerichtet ist/sind.

8. Schneidanordnung (1) nach einem der vorstehenden Ansprüche, wobei die Schneideinrichtung (4, 4') einen Motor (23) umfasst, der konfiguriert ist, um die Schneideinheit (3) um eine Rotationsachse (rA) zu rotieren.

9. Schneidanordnung (1) nach einem der vorstehenden Ansprüche, wobei die Schneideinheit (3) konfiguriert ist, um während des Betriebs der Schneideinheit (3) um eine Rotationsachse (rA) zu rotieren, und wobei die Rotationsachse (rA) in Bezug auf eine Vorwärtsmährichtung (fd') der Schneideinheit (3) vor der Verschiebeachse (dA) eingerichtet ist.

10. Schneidanordnung (1) nach einem der vorstehenden Ansprüche, wobei die Anzahl von Bodeneingriffselementen (5, 5') mindestens ein Bodeneingriffsrad (15, 15') umfasst.

11. Schneidanordnung (1) nach einem der vorstehenden Ansprüche, wobei jedes Bodeneingriffselement (5, 5') der Anzahl von Bodeneingriffselementen (5, 5') eine konvexe Form in einer Richtung (d3) aufweist, die senkrecht zu einer Vorwärtsmährichtung (fd') der Schneidanordnung (1) und parallel zu einer flachen Oberfläche (11') ist, wenn die Schneidanordnung (1) in einer aufrechten Gebrauchsposition auf der flachen Oberfläche (11') positioniert ist.

12. Schneidanordnung (1) nach einem der vorstehenden Ansprüche, wobei die Schneideinrichtung (4, 4') einen Schneidhöhenverstellmechanismus (25, 35) umfasst, der eine Änderung eines vertikalen Abstands (vd) zwischen der Anzahl von Bodeneingriffselementen (5, 5', 5") und der Schneideinheit (3) ermöglicht.

13. Schneidanordnung (1) nach einem der vorstehenden Ansprüche, wobei die Schneideinrichtung (4') einen elektrischen Höheneinstellmechanismus (35) umfasst, der steuerbar ist, um unterschiedliche vertikale Abstände (vd) zwischen der Anzahl von Bodeneingriffselementen (5") und der Schneideinheit (3) bereitzustellen.

14. Rasenmäher (2), umfassend einen Rasenmäherkörper (2') und eine Schneidanordnung nach einem der vorstehenden Ansprüche, wobei die Schneidanordnung (1) an dem Rasenmäherkörper (2') montiert ist.

## Revendications

1. Ensemble de coupe (1) conçu pour être monté sur une tondeuse à gazon (2) pour couper la végétation, l'ensemble de coupe (1) comprenant :
- une unité de montage (8) conçue pour être montée sur un corps de tondeuse à gazon (2') de la tondeuse à gazon (2),
- un agencement de coupe (4, 4') comprenant une unité de coupe (3) et un certain nombre d'éléments de mise en prise avec le sol (5, 5', 5") conçus pour venir en butée contre une surface de sol (11) pendant le fonctionnement de l'ensemble de coupe (1), et
- un agencement de liaison (9),
dans lequel l'agencement de coupe (4, 4') est agencé de manière amovible linéairement par rapport à l'unité de montage (8) par le biais de l'agencement de liaison (9) le long d'un axe de déplacement (dA) pour permettre au nombre d'éléments de mise en prise avec le sol (5, 5', 5") de suivre un contour d'une surface de sol (11) pendant le fonctionnement de l'ensemble de coupe (1), dans lequel l'agencement de liaison (9) comprend un certain nombre de rails (6, 6') fixés à l'un de l'unité de montage (8) et de l'agencement de coupe (4, 4') et un certain nombre de suiveurs (7, 7', 7") fixés à l'autre de l'unité de montage (8) et de l'agencement de coupe (4, 4'), **caractérisé en ce que** l'ensemble de coupe (1) est conçu pour être monté sur une tondeuse à gazon (2) de telle sorte qu'un angle (a0) entre l'axe de déplacement (dA) et une normale de surface (N) d'une surface plane (11') est inférieur à 15 degrés, ou est inférieur à 7 degrés, lorsque la tondeuse à gazon (2) est positionnée dans une position d'utilisation verticale sur la surface plane (11').

2. Ensemble de coupe (1) selon la revendication 1, dans lequel l'agencement de liaison (9) comprend au moins deux suiveurs (7, 7', 7") agencés dans chaque rail (6, 6') à une distance (s1) l'un de l'autre mesurée dans une direction (d1) parallèle à l'axe de déplacement (dA).

3. Ensemble de coupe (1) selon la revendication 1 ou 2, dans lequel l'agencement de liaison (9) comprend deux rails (6, 6') agencés à une distance (s2) l'un de l'autre mesurée dans une direction (d2) perpendiculaire à l'axe de déplacement (dA).

4. Ensemble de coupe (1) selon l'une quelconque des revendications précédentes, dans lequel l'agencement de liaison (9) comprend des suiveurs (7, 7', 7") sous forme de roues (17, 17', 17").

5. Ensemble de coupe (1) selon la revendication 4, dans lequel chaque roue (17, 17', 17") comprend un roulement à billes (19, 19', 19").

6. Ensemble de coupe (1) selon l'une quelconque des revendications précédentes, dans lequel l'unité de coupe (3) est conçue pour être en rotation autour d'un axe de rotation (rA) pendant le fonctionnement de l'unité de coupe (3), et dans lequel le nombre d'éléments de mise en prise avec le sol (5, 5', 5") est agencé devant l'axe de rotation (rA) par rapport à une direction de tonte avant (fd') de l'unité de coupe (3).

7. Ensemble de coupe (1) selon l'une quelconque des revendications précédentes, dans lequel l'unité de coupe (3) comprend un certain nombre d'éléments de coupe (30), et dans lequel le nombre d'éléments de mise en prise avec le sol (5, 5', 5") est disposé devant les éléments de coupe (30) par rapport à une direction de tonte avant (fd') de l'unité de coupe (3).

8. Ensemble de coupe (1) selon l'une quelconque des revendications précédentes, dans lequel l'agencement de coupe (4, 4') comprend un moteur (23) conçu pour mettre l'unité de coupe (3) en rotation autour d'un axe de rotation (rA).

9. Ensemble de coupe (1) selon l'une quelconque des revendications précédentes, dans lequel l'unité de coupe (3) est conçue pour être en rotation autour d'un axe de rotation (rA) pendant le fonctionnement de l'unité de coupe (3), et dans lequel l'axe de rotation (rA) est agencé devant l'axe de déplacement (dA) par rapport à une direction de tonte avant (fd') de l'unité de coupe (3).

10. Ensemble de coupe (1) selon l'une quelconque des revendications précédentes, dans lequel le nombre d'éléments de mise en prise avec le sol (5, 5') comprend au moins une roue de mise en prise avec le sol (15, 15').

11. Ensemble de coupe (1) selon l'une quelconque des revendications précédentes, dans lequel chaque élément de mise en prise avec le sol (5, 5') du nombre d'éléments de mise en prise avec le sol (5, 5') a une forme convexe dans une direction (d3) perpendiculaire à une direction de tonte avant (fd') de l'ensemble de coupe (1) et parallèle à une surface plane (11') lorsque l'ensemble de coupe (1) est positionné dans une position d'utilisation verticale sur la surface plane (11').

12. Ensemble de coupe (1) selon l'une quelconque des revendications précédentes, dans lequel l'agencement de coupe (4, 4') comprend un mécanisme de réglage de hauteur de coupe (25, 35) permettant de modifier une distance verticale (vd) entre le nombre d'éléments de mise en prise avec le sol (5, 5', 5") et l'unité de coupe (3).

13. Ensemble de coupe (1) selon l'une quelconque des revendications précédentes, dans lequel l'agencement de coupe (4') comprend un mécanisme électrique de réglage de hauteur (35) pouvant être commandé pour fournir différentes distances verticales (vd) entre le nombre d'éléments de mise en prise avec le sol (5") et l'unité de coupe (3).

14. Tondeuse à gazon (2) comprenant un corps de tondeuse à gazon (2') et un ensemble de coupe selon l'une quelconque des revendications précédentes, dans laquelle l'ensemble de coupe (1) est monté sur le corps de tondeuse à gazon (2').
